# EUROPEAN PATENT APPLICATION

(11) **EP 4 582 352 A2**
(43) Date of publication of application: **09.07.2025**
(21) Application number: 25162877.2
(22) Date of filing: 16.02.2023
(51) Int. Cl.: B65D 63/10, B65D 65/46, B65D 71/02, B65D 71/28

(54) **PACKAGING OF CONTAINERS WITH PLASTIC FREE PACKAGING MATERIAL**

(30) Priority: 18.02.2022 US 202263268214 P; 10.05.2022 US 202263364456 P
(62) Divisional of application: 23711374.1
(71) Applicant: H.B. Fuller Company, St. Paul, Minnesota 55164-0683 (US)
(72) Inventor: RISWICK, Matheus, 3739 KL Hollandsche Rading (NL); SERGEANT, Richard, 411150 Valloire sur Cisse (FR)
(74) Representative: Maiwald GmbH

(57) **Abstract**

The present invention relates to a packaging of containers comprising a plurality of containers and packaging material, wherein the packaging material is free of plastic and wherein the packaging material comprises a bottom piece made of cardboard or paperboard, wherein the bottom piece is a bottom sheet or a bottom tray, and at least one first paper tape comprising an adhesive. The first paper tape extends vertically around the packaging of containers from one side edge of the bottom piece to an opposing side edge of the bottom piece and is formed into a handle on top of the packaging of containers.

## Description

This application claims the benefit of U.S. Provisional Application No. 63/268,214 filed February 18, 2022, and U.S. Provisional Application No. 63/364,456 filed May 10, 2022 which are incorporated herein.

### FIELD OF THE INVENTION

The present invention relates to a packaging of containers comprising a plurality of containers and packaging materials, wherein the packaging material is free of plastic, and wherein the packaging material comprises a bottom piece made of cardboard or paperboard, wherein the bottom piece is a bottom sheet or a bottom tray, and at least one first paper tape comprising an adhesive. In one embodiment, the packaging of containers further comprises a top cover made of cardboard or paperboard, wherein the top cover is a top tray or a top lid, wherein the at least one first paper tape connects the bottom piece with the top cover. In an alternative embodiment, the first paper tape extends vertically around the packaging of containers from one side edge of the bottom piece to an opposing side edge of the bottom piece and is formed into a handle on top of the packaging of containers.

### BACKGROUND OF THE INVENTION

Containers, especially containers containing food stuff or beverages, etc., are typically grouped into packs by the manufacturer before delivery to retail markets. Such packages of individual containers provide, e.g., for better stability during delivery and easier handling in the retail markets. For example, it is known to group containers into packs on a bottom tray with a plastic shrink wrap. The plastic shrink wrap is to be removed before presenting the container package in a retail market, or the container package can be sold to the consumer while the shrink wrap stays on. In either case, plastic waste material arises. Furthermore, customary bottom trays have side flaps which may extend up to the height of the containers. Usually, information on the manufacturer and the content of the containers is printed on the side flaps of the bottom tray.

A major concern nowadays is to reduce the amount of packaging material in general and particularly the amount of plastic material required for the provision of container packs, especially for environmental reasons or the viewpoint of costs. Moreover, the material used for intermediate packaging desirably should be fully reusable and/or recyclable.

WO 2021/17142 discloses a method of packaging a plurality of food or beverage containers on a single bottom tray. EP 2 122 088 describes a large pack pallet comprising at least two stacked layers with liquid containers, wherein the arrangement of the liquid containers describes a hexagonal close-packing. Optionally, the large pack pallet may be wrapped in a further packaging for transport security. CN 207 510 938U relates to a rectangular box with a top cover and bottom cover, wherein stability of the box is provided by a horizontal curtain inserted between the top cover and bottom cover. The curtain may be made of, e.g., a bamboo sheet.

There still remains a need in the art for a simple, plastic free solution for packaging containers with a reduced amount of packaging material, wherein at least major parts of the packaging material are reusable or recyclable, and wherein the packaging of containers is stable but provides for easy handling during delivery, easy removal of the packaging material in the retail outlets, e.g., without the use of a cutter or knife, and allows for direct presentation of the container packages on retail shelves, e.g., shelf-ready packaging. In some embodiments, the packaging of containers should be preferably manageable in an automated manner by, e.g., robots.

### SUMMARY OF THE INVENTION

The object of the present invention is to meet the above needs. In particular, the present invention aims at a packaging solution for clustering containers into packs, wherein the packaging material is free of plastic, a reduced overall amount of packaging material is sufficient for obtaining stable packs, and the packaging material is reusable or recyclable, while at the same time the packaging material can be removed easily and the container packs can be directly presented on retails shelves. In some embodiments, the packaging of containers according to the invention can be handled, e.g., in an automated manner.

In view of this, the present invention provides a packaging of containers comprising a plurality of containers and packaging material, wherein the packaging material is free of plastic and wherein the packaging material comprises:
(i) a bottom piece made of cardboard or paperboard, wherein the bottom piece is a bottom sheet or a bottom tray, and
(ii) at least one first paper tape comprising an adhesive,
wherein
(a) the packaging of containers further comprises a top cover made of cardboard or paperboard, wherein the top cover is a top tray or a top lid, and wherein the at least one first paper tape connects the bottom piece with the top cover,
   or
(b) the first paper tape extends vertically around the packaging of containers from one side edge of the bottom piece to an opposing side edge of the bottom piece and is formed into a handle on top of the packaging of containers.

The present inventors have found that a container package in accordance with the above exhibits good stability, yet the packaging material can easily be removed. Furthermore, use of plastic packaging materials can be avoided completely according to the present invention. Further advantages of the present invention are apparent from the detailed description below.

### BRIEF DESCRIPTION OF THE DRAWINGS

FIG. 1 shows an illustrative packaging of containers in accordance with the present invention, where the bottom piece is a bottom tray, and there is a top cover, wherein the top cover is a top tray.
FIG. 2 shows an illustrative packaging of containers in accordance with the present invention, where the bottom piece is a bottom tray, and there is a top cover, wherein the top cover is a top lid.
FIG. 3 shows an illustrative packaging of containers (rectangular cuboid-shaped) in accordance with the present invention, where the bottom piece is a bottom sheet, and where the vertical paper tape is formed into a handle on top of the packaging of containers
FIG. 4 shows an illustrative packaging of containers (bottles) in accordance with the present invention, where the bottom piece is a bottom tray, and where the vertical paper tape is formed into a handle on top of the packaging of containers.
FIG. 5 shows an illustrative packaging of containers in accordance with the present invention, where the bottom piece is a bottom sheet, and where the vertical paper tape is formed into a handle on top of the packaging of containers.

### DETAILED DESCRIPTION OF THE INVENTION

As outlined above, the packaging of containers according to the present invention comprises a plurality of containers and packaging material. The packaging material is free of plastic and comprises a bottom piece made of cardboard or paperboard, wherein the bottom piece is a bottom sheet or a bottom tray, and at least one first paper tape comprising an adhesive. In one embodiment, the packaging of containers further comprises a top cover made of cardboard or paperboard, wherein the top cover is a top tray or a top lid, and wherein the at least one first paper tape connects the bottom piece with the top cover. In another embodiment, the first paper tape extends vertically around the packaging of containers from one side edge of the bottom piece to an opposing side edge of the bottom piece and is formed into a handle on top of the packaging of containers.

The term "free of plastic" as used herein basically means that the packaging material in the sense of the present invention includes at most 2.0% by weight of (polymer-based) plastic material, based on the total weight of the packaging material, preferably at most 1.0% by weight of plastic material, such as at most 0.1% by weight of plastic material. In some embodiments of the present invention, the packaging material does not include any polymer-based plastic material (0.0% by weight of plastic material).

The type of containers suitable in accordance with the present invention is not particularly limited and basically are containers for food stuff or beverages as known in the art. For example, the containers may include rectangular cuboid-shaped containers such as liquid beverage cartons, bottles such as PET bottles or cans such as aluminum cans. In an embodiment, the containers are rectangular cuboid-shaped containers.

In the packaging of containers according to the present invention, the containers are typically arranged on the bottom piece in at least one row on the rectangular base area. For example, a total of two or three containers may be arranged in one row on a basically rectangular base area, a total of four, six, eight or ten containers may be arranged in two rows on a basically rectangular base area, or a total of nine, twelve or 15 containers may be arranged in three rows on a basically rectangular base area, a total of 16, 20 or 24 containers may be arranged in four rows on a basically rectangular base area, etc. The size of the bottom piece fits to the base area. That is to say, the perimeter of the arrangement of containers corresponds to the size of the bottom sheet or closely fits into the bottom tray.

The first paper tape used in accordance with the present invention includes adhesive coated paper. The paper used for the first paper tape is not particularly limited. The paper can include cellulose (e.g., wood, cotton, bamboo, jute, hemp, thistle, linen, abaca, etc.), vegetables, other naturally derived materials or a combination thereof.

The paper can further include other materials such as e.g., fillers (e.g., calcium carbonate, clay, etc.), wet strength resins (e.g., urea-formaldehyde, melamine-formaldehyde, polyamide-epichlorohydrin) and dry strength resins (e.g., starches, natural gums (guar, locast bean, etc.), cationic polyacrylamides, etc.).

The first paper tape used in accordance with the present invention can be made of stretchable paper or non-stretchable paper. In one embodiment, the first paper tape is made of stretchable paper. As known in the art, papers can be provided with stretchability by means of shrinking at the end of the paper production process. In one embodiment, the paper tape is made of paper having a stretchability, determined according to ISO 1924-3, of 4% to 20%. In a preferred embodiment, the paper tape is made of paper having a stretchability of 5% to 20%, such as 6% to 16%.

Use of a stretchable paper for making the paper tape in the packaging of containers according to the present invention enables the paper tape to absorb shock loads and tensile energy, and thus will make the packaging of containers more stable and stronger during shipping and internal factory transport. That is to say, use of a stretchable paper reduces the risk of the paper tape to break, and allows for the use of a lower basic weight for the paper.

The paper basis weight of the first paper tape is not particularly limited. In an embodiment of the present invention, the first paper tape is made of paper having a basis weight, determined according to ISO 536, of 35 to 250 g/m². In a preferred embodiment, the first paper tape is made of paper having a basis weight of 70 to 160 g/m², such as 35 to 150 g/m².

In addition, the thickness of the first paper tape is according to the present invention not specifically limited. In an embodiment, the first paper tape is made of paper having a thickness, determined according to ISO 534, of 50 to 200 µm. In another embodiment, the paper tape is made of paper having a thickness of 75 to 150 µm.

Illustrative example of commercially available paper suitable to be used as a first paper tape in accordance with the present invention include, e.g., ADVANTAGE STRETCH WRAP or ADVANTAGE MF SPRING PACK PLUS 160 and 70 available from The Mondi Group (Atlanta, GA), SPRING FORMULA 140 and 155 available from Stora Enso (Helsinki, Finland) and FIBRE FORM white 3d paper in basis weights of 80 to 250 g/m² available from Billerudkorsnäs AB (Solna, Sweden). Other suitable paper tapes are commercially available e.g., from Herbert Schümann Papierverarbeitungswerk GmbH, Germany.

According to the present invention, the packaging of containers may optionally comprise a second paper tape comprising an adhesive, wherein the second paper tape spans horizontally around the plurality of containers. A second paper tape - applied horizontally around the plurality of containers - may further improve stability of the packaging. As regards to type of paper for the second (horizontal) paper tape, the same type of paper as outlined above for the vertical first paper tape can be used.

The first paper tape in the packaging of containers according to the present invention and the optional second (horizontal) paper tape comprise an adhesive. The same type of adhesive can be used in the first and the optional second paper tape. The adhesive can be applied to the paper tape during manufacture of the packaging of containers. Otherwise, a paper tape with preapplied adhesive may be used. The type of adhesive on the first (and optional second) paper tape is according to the present invention not particularly limited. In an embodiment, the adhesive is selected from a microsphere adhesive, a hot melt adhesive, a hot melt pressure sensitive adhesive, a starch-based adhesive and a water-based pressure sensitive adhesive. In an embodiment, a combination of two or more different adhesives can be employed according to the invention.

Microsphere adhesives are known in the art. The microsphere adhesive can be in the form of an aqueous suspension of microspheres. Suitable microspheres include solid microspheres, hollow microspheres, and mixtures thereof. Suitable monomers from which the microspheres can be derived include, e.g., alkyl acrylates (e.g., butyl acrylate, ethyl acrylate, methyl acrylate, 2-ethylhexyl acrylate, isooctyl acrylate, isobornyl acrylate, and combinations thereof), alkyl methacrylates (e.g., methyl methacrylate and butyl methacrylate), and combinations thereof (e.g., 2-ethylhexyl acrylate/isobornyl acrylate copolymers). The microspheres optionally can be derived from at least one additional class of monomers including, e.g., polar comonomers (e.g., acrylic acid, methacrylic acid, hydroxyethyl acrylate, hydroxypropyl acrylate, N-tertiary octylacrylamide, acrylonitrile, acrylamide, 1-vinyl-2-pyrrolidone, and sodium vinyl sulfonate), vinyl esters (e.g., vinyl acetate, vinyl propionate, vinyl neodecanoate, vinyl stearate and vinyl pivalate), cross-linking monomers (e.g., butanediol diacrylate and hexanediol diacrylate), and combinations thereof. The microsphere adhesive can optionally include other components including, e.g., additional polymers, surfactant, suspension agents, thickening agents and combinations thereof.

Hot melt adhesives are likewise well-known in the art. Suitable hot melt adhesives can be selected from any number of hot melt adhesive compositions including hot melt pressure sensitive adhesives, non-pressure sensitive hot melt adhesives, remoistenable hot melt adhesives, water dispersible/water soluble hot melt adhesives, alkali soluble/dispersible hot melt adhesives, water insoluble hot melt adhesives, compostable hot melt adhesives and biodegradable hot melt adhesives. Typical hot melt adhesive compositions include those based on a variety of different thermoplastic polymers including, e.g., homopolymer, copolymers, terpolymers, and higher order thermoplastic polymers. Suitable classes of thermoplastic polymers include, e.g., olefin polymer (e.g., olefin homopolymer, copolymers and higher order polymers (e.g., ethylene vinyl acetate, polyolefins (e.g., polyethylene, polypropylene, metallocene-catalyzed polyolefins, and combinations thereof)), and combinations thereof; acrylates (e.g., alkyl acrylates and methacrylates (e.g., ethyl acrylate, ethyl methacrylate, ethyl n-butyl acrylate, butyl acrylate, butyl methacrylate, and combinations thereof)); elastomers (e.g., elastomeric block copolymers (e.g., styrenebutadiene-styrene, styrene-isoprene-styrene, styrene-ethylene/butylene-styrene, and styrene-ethylene/propylene-styrene), elastomeric polyolefins, and combinations thereof); thermoplastic polyesters (e.g., poly lactic acid (PLA) based polymers, polyhydroxyalkanoate (PHA) based polymers, polycaprolactone, etc.); thermoplastic polyamides; thermoplastic polyurethanes; graft copolymers of polyvinyl acetate (or polyacrylates) and polyethylene glycol; polyvinyl pyrrolidone or vinyl acetate copolymers; and combinations thereof.

Starch-based adhesives are also known in the art. Starch based adhesives include dextrin (dextrin is a starch that is processed further). Starch based adhesives include those derived from natural sources (e.g., corn, wheat, potato, rice, tapioca, sago, etc.) and those derived from natural sources that are synthetically modified (e.g., functionalized, treated with salts, treated with caustic soda, borated, etc.). Starched based adhesives can further include processing aids to enhance performance and add additional properties (e.g., colorants, defoaming agents, urea, glycols, surfactants, sodium nitrate, etc.).

In an embodiment, the adhesive is a starch-based adhesive. Starch-based adhesives are bio-based and compostable, and do not interfere with paper recycling. Examples of suitable starch-based adhesives are illustrated, e.g., in WO 2012/044164. Illustrative examples of commercially available starch-based adhesives suitable in accordance with the present invention is, e.g., Solvitose Greenmelt of Royal Avebe Adhesives, NL and PA1150 EN 001 commercially available from HB Fuller Company.

In a preferred embodiment, the adhesive composition can include bio-based materials. The term "bio-based" is used herein to refer to a component of the adhesive or an adhesive composition that is at least partially produced or is partially derived from a renewable resource. Bio-based materials are not necessarily compostable. In one embodiment, the adhesive composition includes at least 40% by weight, at least 60% by weight, at least 80% by weight, from 40% to 100% by weight, or from 60% to 100% by weight of bio-based materials, or even is entirely comprised of bio-based materials.

In a preferred embodiment, the adhesive composition can include compostable materials. "Compostable" is used herein to refer to a component of the adhesive composition or an adhesive composition that passes ASTM D 6400 or BS EN 13432:2000. Compostable materials are not necessarily bio-based. In one embodiment, the adhesive composition includes at least 40% by weight, at least 60% by weight, at least 80% by weight, from 40% to 100% by weight, or from 60% to 100% by weight of compostable materials, or even is entirely comprised of compostable materials.

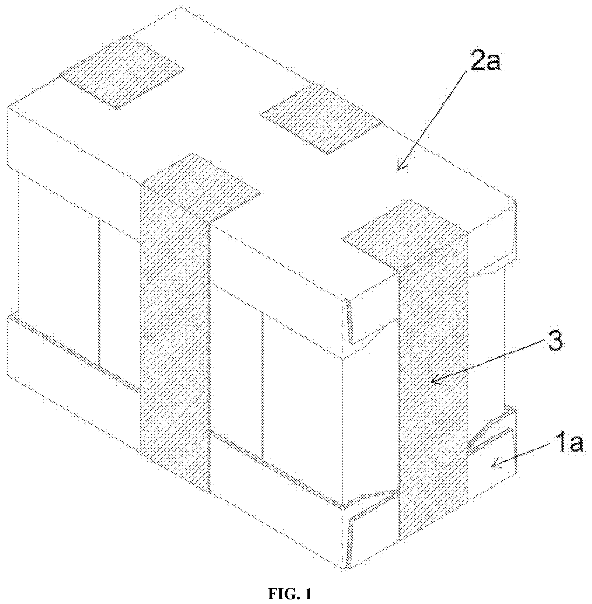

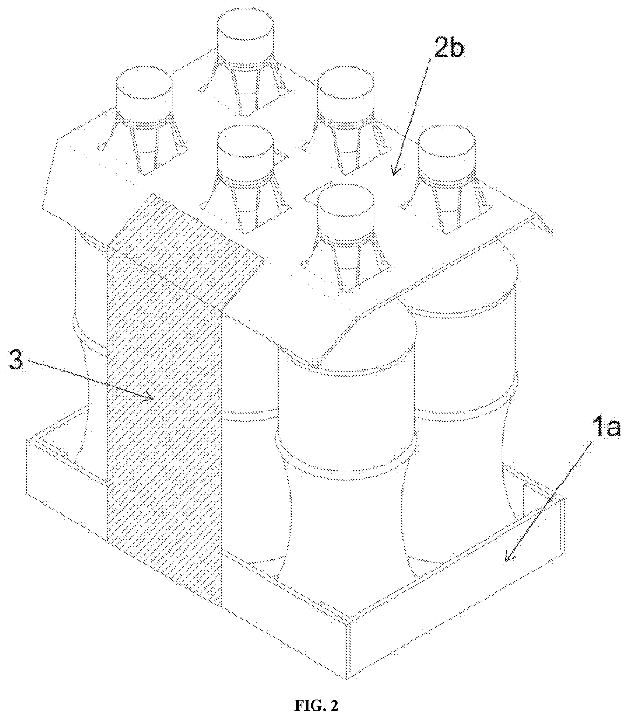

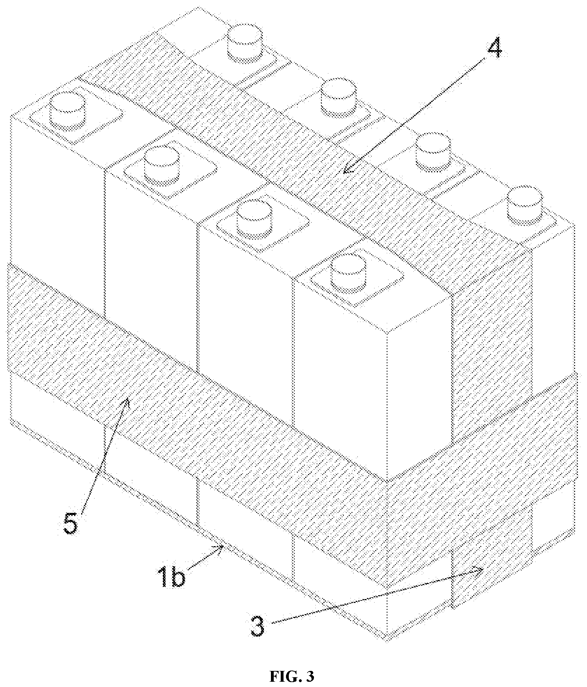

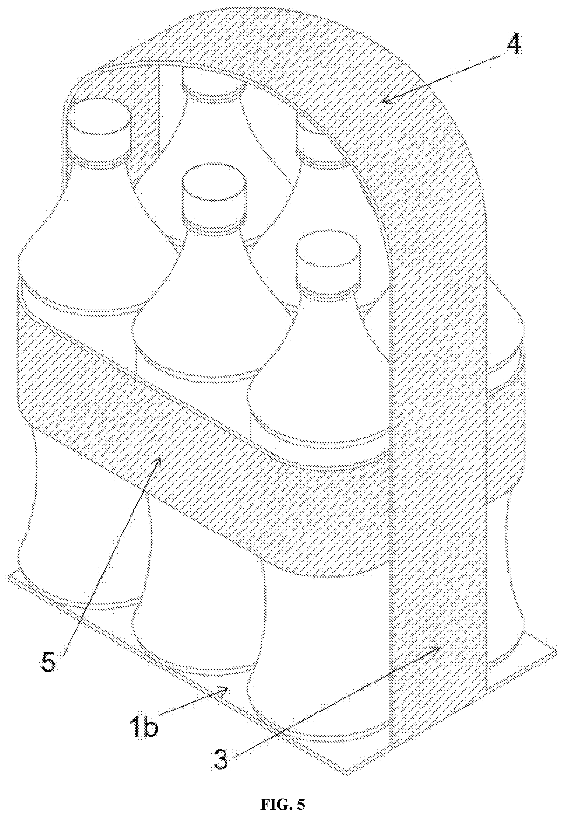

The packaging of containers according to the present invention comprises a bottom piece made of cardboard or paperboard. The bottom piece can be a bottom sheet made of cardboard or paperboard or a bottom tray made of cardboard or paperboard. The term "bottom tray" in the sense of the present invention refers to a bottom piece having side flaps, i.e., vertical portions made of cardboard or paperboard attached to the horizontal portion of the bottom piece, respectively. Embodiment in which the bottom piece is a bottom tray are shown in e.g., FIG. 1 and FIG. 2. The term "bottom sheet" in the sense of the present invention refers to a bottom piece without side flaps, i.e., a simple cardboard or paperboard sheet. Embodiments in which the bottom piece is a bottom sheet are shown in FIG. 3 and FIG. 5.

In one embodiment, the bottom piece can be a bottom tray made of cardboard or paperboard. In this case, when the containers have a given height h, the side flaps of the bottom tray extend from the bottom of the packaging of containers to at most 50% of h. In an embodiment, the side flaps of the bottom tray extend from the bottom of the packaging of containers to at most 35% of h. In another embodiment, the side flaps of the bottom extend to up to 30% of h from the bottom of the packaging of containers, respectively. In a preferred embodiment, the side flaps of the bottom tray extend to up to 25% of h from the bottom of the packaging of containers, such as up to 20% of h. Reducing the height of side flaps of the bottom tray in accordance with the present invention reduces the overall amount of required packaging material, and after removal of top cover and paper tape directly provides container packages with improved shelf appeal and optionally shelf-ready packaging.

In another embodiment, the bottom piece can be a bottom sheet made of cardboard or paperboard. The packaging of containers in embodiments where the bottom piece is a bottom sheet preferably further comprises a second paper tape comprising an adhesive spanning horizontally around the plurality of containers as mentioned above. In another embodiment, when the bottom piece is a bottom sheet, the containers are glued to the bottom sheet by means of an adhesive. Any type of adhesive can be used in this respect, including the adhesives discussed above adhesive in connection with the first (and optional second) paper tape. In one embodiment, the containers are glued to the bottom sheet by means of a hotmelt pressure-sensitive adhesive as defined above.

As outlined above, the packaging of containers according to the present invention either (i) further comprises a top cover made of cardboard or paperboard, wherein the top cover is a top tray or a top lid, and wherein the at least one first paper tape connects the bottom piece with the top cover, or (ii) the first paper tape extends vertically around the packaging of containers from one side edge of the bottom piece to an opposing side edge of the bottom piece and is formed into a handle on top of the packaging of containers. Each of these alternative embodiments will be explained in more detail in the following.

According to the embodiments with top cover, the plurality of containers is placed in-between the bottom piece and a top cover made of cardboard or paper board and connected by means of a paper tape. At least one first paper tape is applied vertically and adheres to top cover, bottom piece (and optionally in part to some containers) by means of an adhesive. The expression "wherein the at least one paper tape connects the bottom piece with the top cover" basically means in accordance with this embodiment of the present invention that at least one paper tape reaches from bottom piece to top cover. For example, two individual first paper tapes of sufficient length allowing to reach from bottom piece to top cover are applied to the packaging of containers so as to connect top cover and bottom piece. Alternatively, the first paper tape may form a closed circuit completely enclosing vertically the combination of bottom piece, plurality of containers and top cover.

The size of the top cover is selected such so as to fit to the rectangular base area spanned by the plurality of containers as well. That is to say, the breadth and length of top cover (as well as bottom piece) are selected such that the top cover closely fits to the perimeter of the arrangement of containers. In embodiments where the top cover is a top tray having side flaps, the perimeter of the arrangement of containers closely fits into the top tray.

The top cover in accordance with this embodiment is either a top tray or a top lid. The term *"top tray"* in the sense of the invention refers to a top cover made of cardboard or paperboard having no holes and being of similar type as a bottom tray in principle known in the art. An embodiment of the present invention where the top cover is a top tray (and the bottom piece is a bottom tray) is shown in FIG. 1.

The term "top lid" in the sense of the invention refers to a top cover made of cardboard or paperboard and having openings. The number and placement of openings corresponds to the number and the location of the containers to be arranged, so that in the final packaging of containers, the containers can partly fit though the openings. The top lid can also be referred to as "top collar". Some containers as customary known have a shape with upper portion having a narrower diameter than the remaining body of the container. For example, usual bottles may have a top bottle lid of significantly smaller diameter than the remaining body of the bottle, and the upper portion of the bottle, where the bottle lid is attached, has a smaller diameter as well. Moreover, also cans typically have an upper ring of slightly smaller diameter than the remaining body of the can. In the embodiments of the invention where the top cover is present and is a top lid with openings, the openings in the cardboard or paperboard of the top lid have a size allowing the upper portion of smaller diameter of bottles or cans to fit though the openings, while lower portions of the bottle or can with greater diameter are held in place by the top lid or top collar. An embodiment of the present invention where the top cover is a top lid (and the bottom piece is a bottom tray) is shown in FIG. 2.

In the embodiments where the top cover is present and is a top tray, the top tray may have side flaps (vertical portions made of cardboard or paperboard attached to the horizontal portion of top tray) as well. In case of containers having a given height h, the side flaps of the top tray extend from the top of the packaging of containers to at most 50% of h. In an embodiment, the side flaps of the top tray extend from the top of the packaging of containers to at most 35% of h. In another embodiment, the side flaps of the top tray extend to up to 30% of h from the top of the packaging of containers. In a preferred embodiment, the side flaps of the top tray extend to up to 25% of h from the top of the packaging of containers, such as up to 20% of h. Reducing the height of side flaps reduces the overall amount of required packaging material.

In embodiments where the top cover is a top lid, the top lid can have side flaps as well or does not have side flaps. In an embodiment, the top lid is a sheet of paperboard or cardboard corresponding in length and breadth to the perimeter spanned by the plurality of containers, and having no side flaps.

FIG. 1 shows a packaging of containers in accordance with the embodiment having a top cover. A plurality of containers is arranged in two rows of respectively four containers on a basically rectangular base area. The embodiment of the present invention where the top cover is a top tray is illustrated in FIG. 1. In FIG. 1, rectangular cuboid-shaped liquid beverage carton containers are shown. However, the present invention is applicable to other types of containers as well such as bottles or cans. The bottom piece in in FIG. 1 is a bottom tray (1a). Alternatively, a bottom sheet could be used. The base area of the plurality of containers fits into the space spanned by the side flaps of the bottom tray (1a). In the same way, the packaging of containers comprises a top cover, which here is a top tray (2a) closely covering the upper portion of the plurality of containers. The containers typically have a lid on top thereof (covered in FIG. 1 by top tray (2a)). The presence of a top tray (2a) protects the lids of the containers from damage, e.g., during delivery, etc. Furthermore, top tray (2a) and bottom tray (1a) are connected by means of a paper tape (3) connecting bottom tray (1a) and top tray (2a).

In the illustrative embodiment according to FIG. 1, four paper tape strips are shown, i.e., one paper tape strip on each side surface of the container package. However, the present invention is not specifically limited as regards the number of paper tape strips used for connecting bottom piece and top cover. For example, one paper tape strip (e.g., forming a closed circuit) enclosing vertically the combination of bottom piece, plurality of containers and top cover can be used. According to another example, two individual paper tape strips on opposing side surfaces of the packaging of containers can be used for connecting top cover and bottom piece. Alternatively, three individual paper tape strips placed on three different side surfaces of the container packaging may be used. According to another example, four individual paper tape strips on each side surface of the packaging of containers can be used as illustratively shown in FIG. 1.

FIG. 2 shows a packaging of containers in accordance with the embodiment of the invention where the top cover is present and is a top lid. A plurality of containers is arranged in two rows of respectively three containers on a basically rectangular base area. The containers shown in FIG. 2 are bottles. However, as outlined above, the present invention is applicable to other types of containers as well such as rectangular cuboid-shaped liquid beverage carton containers or cans. The bottom piece shown in FIG. 2 is a bottom tray (1a). The base area of the plurality of containers fits into the space spanned by the side flaps of the bottom tray (1a). The packaging of containers shown in FIG. 2 comprises a top cover, which is a top lid (2b) closely covering the upper portion of the plurality of containers. Top lid (2b) and bottom tray (1a) are connected by means of a strip of paper tape (3) connecting bottom tray (1a) and top lid (2b). A second strip of paper tape (not visible in FIG. 2) connecting top lid (2b) and bottom tray (1a) can be applied to the opposing side of the plurality of containers. The lids of the bottles fit though corresponding holes in the top lid (2b). In FIG. 2, top lid (2b) does not have side flaps.

Next, the embodiment according to the present invention in which the first paper tape extends vertically around the packaging of containers from one side edge of the bottom piece to an opposing side edge of the bottom piece and is formed into a handle on top of the packaging of containers will be explained in more detail.

In the embodiment where the first paper tape extends vertically around the packaging of containers from one side edge of the bottom piece to an opposing side edge of the bottom piece and is formed into a handle on top of the packaging of containers, the packaging of containers according to the invention does not include a top cover. Instead, the first paper tape extending from one side edge of the bottom piece to an opposing side edge of the bottom piece is formed into a handle on top of the packaging of containers. The handle allows for the packaging to be carried conveniently. FIG. 3, FIG. 4 and FIG. 5 show a packaging of containers in accordance with this embodiment of the invention.

The embodiment of the invention according to FIG. 3 includes a plurality of rectangular cuboid-shaped containers arranged in two rows of respectively four rectangular cuboid-shaped containers on a bottom sheet (1b). Moreover, there is a first paper tape (3) extending vertically around the packaging of containers from one side edge of the bottom sheet (1b) to the opposing side edge of the bottom sheet (1b). On top of the packaging of containers, the first paper tape (3) is formed into a handle (4). This is indicated in FIG. 3 in view of a reduced breadth of the first paper tape (3) in the handle section (4). FIG. 3 further shows an optional second paper tape (5) spanning horizontally around the plurality of containers.

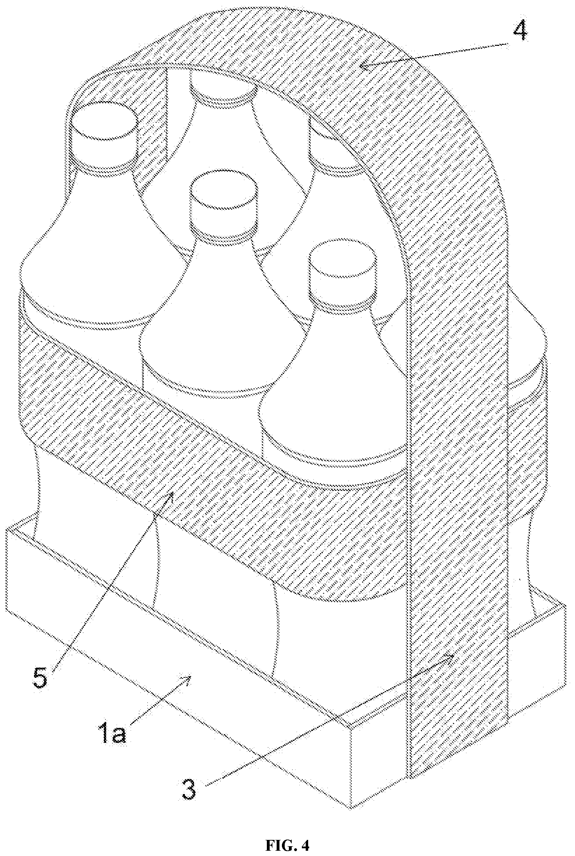

The embodiment of the invention according to FIG. 4 includes a plurality of bottles arranged in two rows of respectively three bottles on a bottom tray (1a). Moreover, there is a first paper tape (3) extending vertically around the packaging of containers from one side edge of the bottom tray (1a) to the opposing side edge of the bottom tray (1a). On top of the packaging of containers, the first paper tape (3) is formed into a handle (4). FIG. 4 further shows a second paper tape (5) spanning horizontally around the plurality of containers. However, as outlined above, the presence of a second horizontal paper tape is only optional according to the present invention.

The embodiment of the invention according to FIG. 5 includes a plurality of bottles arranged in two rows of respectively three bottles on a bottom sheet (1b). Moreover, there is a first paper tape (3) extending vertically around the packaging of containers from one side edge of the bottom sheet (1b) to the opposing side edge of the bottom sheet (1b). On top of the packaging of containers, the first paper tape (3) is formed into a handle (4). FIG. 5 likewise shows an optional second paper tape (5) spanning horizontally around the plurality of containers.

The first paper tape comprising adhesive can be formed into a handle e.g., by folding the surface of the paper tape comprising adhesive upon itself. This can be done e.g., by forming short cuts in each side edge of the paper tape at the beginning and end of the section of the paper tape that should be formed into a handle section. The part of the side edges between the respective cuts can then be folded upon the inner portions of the paper tape to form a handle. In another embodiment, the handle can be formed by attaching a piece of paper onto the adhesive side of the first paper tape in the section that should be formed into a handle. A piece of ordinary paper without specific requirements can be employed here.

In principle, any of the above-described first paper tapes can be used in this embodiment. Depending on the weight of the containers in the packaging of containers according to the invention, it may be preferable to use a fiber-reinforced first paper tape, e.g., in case where the weight of the containers is high. Fiber-reinforced paper tapes suitable in this respect can be formed e.g., by applying threads of fibers (e.g., diagonal and/or longitudinal threads of fibers) between two layers of paper. The type of fibers for reinforcing the paper tape is according to the present invention not specifically limited. For example, glass fibers, or naturally sourced fiber materials including rayon, polyvinyl alcohol, cotton, bamboo, flax, lyocell, ramie, linen, hemp, wool, silk, jute, soybean protein fiber, cellulose acetate, and combinations or mixtures thereof may be used here. Alternatively, fibers for reinforcing the paper tape, which typically are present in the fiber reinforced paper tape in only a low amount, can be made of plastics such as polypropylene, polyester (for example polyethylene terephthalate (PET), polybutylene terephthalate (PBT), liquid crystalline polymers), polyamide (for example nylon, the synthetic fiber available under the trade designation KEVLAR) and combinations thereof. In the latter embodiment where plastics are used for the provision of reinforcing fibers, recycled raw material based on plastic waste is preferably employed. Fiber-reinforced paper tapes comprising adhesive suitable in accordance with the present invention are commercially available and include e.g., UNIKRAFT 110 R from Herbert Schümann Papierverarbeitungswerk GmbH, Germany.

The first paper tape in embodiments with a handle on top of the packaging of containers can be a stretchable or non-stretchable paper tape as outlined above. In some embodiments, the first paper tape formed into the handle is non-stretchable.

The packaging of containers in accordance with the embodiment with top handle may also comprise a second paper tape comprising an adhesive spanning horizontally around the plurality of containers, as generally described above. The same type of second (horizontal) paper tapes as described above in connection with first and optional second paper tapes in general can be used here.

In another embodiment with top handle, the containers can be glued to the bottom piece by means of an adhesive. The same types of adhesives as discussed above can be used for this purpose. A suitable type of adhesive for gluing the containers to the bottom piece is e.g., a hot melt pressure sensitive adhesive.

In embodiments of the present invention where the first paper tape is formed into a handle on top of the packaging of containers, the packaging material may consist of bottom piece, first paper tape comprising adhesive, and optionally second (horizontal) paper tape comprising adhesive and/or adhesive gluing the containers to the bottom piece (such as a bottom sheet). In embodiments where a top cover is present, the packaging material may consist of top cover, bottom piece, first paper tape comprising adhesive, and optionally second (horizontal) paper tape comprising adhesive and/or adhesive gluing the containers to the bottom piece (such as a bottom sheet). The bottom piece and, if present, the top cover are made of cardboard or paper board, i.e., paper fiber-based materials. In addition, also the first paper tape and the optional second paper tape are made of paper fiber-based materials. In one embodiment, at least 90% by weight of the packaging material are comprised of paper fiber-based materials. The presence of minor amounts of adhesive on the first or second paper tape does not interfere with recyclability of the paper fiber-based packaging material. In another embodiment, at least 95% by weight of the packaging material are comprised of paper fiber-based materials, such as such as from 90% to 100%, or from 95% to 100% by weight of fiber-based materials, or the packaging material even is entirely comprised of fiber-based materials.

Typically, the packaging material employed in the present invention is at least partially produced or is partially derived from renewable resources. "Renewable resource" is used herein to refer to a resource that is produced by a natural process at a rate comparable to its rate of consumption. The resource can be replenished naturally or by engineered agricultural techniques. Examples of renewable resources include but are not limited to plants (e.g., sugar cane, beets, corn, potatoes, citrus fruit (e.g., oranges), woody plants, cellulosic waste, etc.), animals, fish, bacteria, fungi, and forestry products (e.g., pine and spruce trees). These resources can be naturally occurring, hybrids, or genetically engineered organisms. Other examples of renewable resources included raw materials based on CO₂ capture produced with renewable energy. Natural resources such as crude oil, coal and natural gas are not considered renewable as they are derived from materials that will run out or will not be replenished for thousands or even millions of years.

In one embodiment, the packaging material includes at least 90% by weight, based on the total weight of the packaging material, of bio-based materials as defined above, preferably at least 95% by weight of bio-based materials, such as from 90% to 100%, or from 95% to 100% by weight of bio-based materials, or even is entirely comprised of bio-based materials.

In another embodiment, the packaging material includes at least 90% by weight, based on the total weight of the packaging material, of compostable materials as defined above, preferably at least 95% by weight of compostable materials, such as from 90% to 100%, or from 95% to 100% by weight of compostable materials. In a preferred embodiment, the packaging material is entirely comprised of compostable materials.

In general, the present invention provides a number of benefits. For example, the environmental impact of packaging materials is reduced, the packaging of containers can be produced easily, the packaging of containers can safely be handled, e.g., by robots, during delivery, and handling in retail market is simplified.

The packaging material used in the present invention is free of plastic. In addition, the overall amount of packaging material can be reduced according to the present invention, and the packaging material as such is reusable and/or recyclable. Accordingly, the present invention reduces the environmental impact of packaging material.

Moreover, the packaging of containers according to the present invention can be produced easily by grouping a plurality of containers in at least one row on cardboard or paperboard bottom piece, covering the plurality of containers with a cardboard or paperboard top cover, and connecting bottom tray and top cover with a first paper tape comprising adhesive. A paper tape with preapplied adhesive can be used here, or the adhesive can be applied to the paper tape during production of the packaging of containers. In another embodiment, the packaging of containers according to the present invention can be produced easily by grouping a plurality of containers in at least one row on cardboard or paperboard bottom piece, and connecting one side edge of the bottom piece to an opposing side edge of the bottom piece with a first paper tape comprising adhesive, while forming the first into a handle on top of the packaging of containers.

The packaging of containers according to the present invention further can be handled safely and easily throughout the supply chain. For example, the packaging of containers has sufficient stability to be handled in an automated manner. Embodiments, where a top cover connected to the bottom piece is present further can be handled by, e.g., vacuum lifting. The packaging material in the sense of the present invention also can absorb shock loads, and thus provides good stability.

Also handling of the packaging of containers in the retail market is simplified according to the present invention. For example, the paper tapes can be removed without requiring a cutter or knife. Accordingly, the top cover, if present, also can be removed easily, thus directly providing shelf-ready packaging and improved shelf appearance.

The present invention is further supported by the following items:
Item 1: A packaging of containers comprising a plurality of containers and packaging material, wherein the packaging material is free of plastic and wherein the packaging material comprises:
   (i) a bottom piece made of cardboard or paperboard, wherein the bottom piece is a bottom sheet or a bottom tray, and
   (ii) at least one first paper tape comprising an adhesive,
   wherein
   (a) the packaging of containers further comprises a top cover made of cardboard or paperboard, wherein the top cover is a top tray or a top lid, and wherein the at least one first paper tape connects the bottom piece with the top cover,
      or
   (b) the first paper tape extends vertically around the packaging of containers from one side edge of the bottom piece to an opposing side edge of the bottom piece and is formed into a handle on top of the packaging of containers.
Item 2: The packaging of containers according to item 1, wherein the containers are selected from rectangular cuboid-shaped containers, bottles and cans, and wherein the containers are preferably rectangular cuboid-shaped containers.
Item 3: The packaging of containers according to items 1 or 2, wherein the paper tape is made of paper having a stretchability, determined according to ISO 1924-3, of 4% to 20%.
Item 4: The packaging of containers according to any one of items 1 to 3, wherein the paper tape is made of paper having a basis weight, determined according to ISO 536, of 35 to 250 g/m² and/or a thickness, determined according to ISO 534, of 50 to 200 µm.
Item 5: The packaging of containers according to any one of items 1 to 4, wherein the adhesive is selected from a microsphere adhesive, a hot melt adhesive, a hot melt pressure sensitive adhesive, a starch-based adhesive, and a water-based pressure sensitive adhesive, and wherein the adhesive preferably is a starch-based adhesive.
Item 6: The packaging of containers according to any one of items 1 to 5, wherein the adhesive includes at least 40% by weight of bio-based materials, based on the total weight of the adhesive, preferably at least 60% by weight of bio-based materials, more preferably at least 80% by weight of bio-based materials, such as from 40% to 100% of bio-based materials.
Item 7: The packaging of containers according to any one of items 1 to 6, wherein the adhesive includes at least 40% by weight of compostable materials, based on the total weight of the adhesive, preferably at least 60% by weight of compostable materials, more preferably at least 80% by weight of compostable materials, such as from 40% to 100% of compostable materials.
Item 8: The packaging of containers according to any one of items 1 to 7, wherein the containers are arranged in at least one row on a rectangular base area, and wherein the size of the bottom piece fits to the base area.
Item 9: The packaging of containers according to any one of items 1 to 8, wherein the containers have a height h and the bottom piece is a bottom tray having side flaps, and wherein the side flaps of the bottom tray extend from the bottom of the packaging of containers to at most 35% of h.
Item 10: The packaging of containers according to any one of items 1 to 9, wherein the packaging of containers comprises a top cover as defined in point (a) of item 1, and wherein the packaging material consists of the bottom piece, the top cover and the first paper tape comprising adhesive.
Item 11: The packaging of containers according to any one of items 1 to 9 further comprising a second paper tape comprising an adhesive, wherein the second paper tape spans horizontally around the plurality of containers, and wherein preferably the paper of the second paper tape is as defined in items 3 or 4, and preferably the adhesive is as defined in items 5 or 6.
Item 12: The packaging of containers according to any one of items 1 to 9, wherein the bottom piece is a bottom sheet, and wherein
   the packaging of containers further comprises a second paper tape comprising an adhesive, wherein the second paper tape spans horizontally around the plurality of containers, and wherein preferably the paper of the second paper tape is as defined in items 3 or 4, and preferably the adhesive is as defined in items 5 or 6;
      and/or
   wherein the containers are glued to the bottom sheet by means of an adhesive.
Item 13: The packaging of containers according to item 12, wherein
   the packaging of containers comprises a top cover as defined in point (a) of item 1, and the packaging material consists of the bottom sheet, the top cover, the first paper tape comprising adhesive, and optionally the second paper tape comprising adhesive, and/or optionally the adhesive gluing the containers to the bottom sheet;
      or
   the first paper tape is formed into a handle on top of the packaging of containers as defined in point (b) of item 1, and the packaging material consists of the bottom sheet, the first paper tape comprising adhesive, optionally the second paper tape comprising adhesive, and/or optionally the adhesive gluing the containers to the bottom sheet.
Item 14: The packaging of containers according to any one of items 1 to 8, wherein the first paper tape is formed into a handle on top of the packaging of containers as defined in point (b) of item 1, and wherein
   the packaging of containers further comprises a second paper tape comprising an adhesive, wherein the second paper tape spans horizontally around the plurality of containers, and wherein preferably the paper of the second paper tape is as defined in items 3 or 4, and preferably the adhesive is as defined in items 5 or 6;
      and/or
   wherein the containers are glued to the bottom piece by means of an adhesive, preferably by means of a hot melt pressure sensitive adhesive;
      and/or
   the first paper tape is fiber-reinforced;
      and/or
   the first paper tape folded upon itself on top of the packaging of containers to form the handle, or a piece of paper is attached to the first paper tape on top of the packaging of containers to form the handle.
Item 15: The packaging of containers according to any one of items 1 to 14, wherein at least 90% by weight of the packaging material are comprised of paper fiber-based materials, and wherein preferably the packaging material is entirely comprised of compostable materials.

## Claims

1. A packaging of containers comprising a plurality of containers and packaging material, wherein the packaging material is free of plastic and wherein the packaging material comprises:
(i) a bottom piece made of cardboard or paperboard, wherein the bottom piece is a bottom sheet (1b) or a bottom tray (1a), and
(ii) at least one first paper tape (3) comprising an adhesive,
wherein the first paper tape (3) extends vertically around the packaging of containers from one side edge of the bottom piece to an opposing side edge of the bottom piece and is formed into a handle (4) on top of the packaging of containers.

2. The packaging of containers according to claim 1, wherein the containers are selected from rectangular cuboid-shaped containers, bottles and cans, and wherein the containers are *preferably* rectangular cuboid-shaped containers.

3. The packaging of containers according to claims 1 or 2, wherein the paper tape (3) is made of paper having a stretchability, determined according to ISO 1924-3, of 4% to 20%.

4. The packaging of containers according to any one of claims 1 to 3, wherein the paper tape (3) is made of paper having a basis weight, determined according to ISO 536, of 35 to 250 g/m² and/or a thickness, determined according to ISO 534, of 50 to 200 µm.

5. The packaging of containers according to any one of claims 1 to 4, wherein the adhesive is selected from a microsphere adhesive, a hot melt adhesive, a hot melt pressure sensitive adhesive, a starch-based adhesive, and a water-based pressure sensitive adhesive, and wherein the adhesive *preferably* is a starch-based adhesive.

6. The packaging of containers according to any one of claims 1 to 5, wherein the adhesive includes at least 40% by weight of bio-based materials, based on the total weight of the adhesive, *preferably* at least 60% by weight of bio-based materials, more *preferably* at least 80% by weight of bio-based materials, such as from 40% to 100% of bio-based materials.

7. The packaging of containers according to any one of claims 1 to 6, wherein the adhesive includes at least 40% by weight of compostable materials, based on the total weight of the adhesive, *preferably* at least 60% by weight of compostable materials, more *preferably* at least 80% by weight of compostable materials, such as from 40% to 100% of compostable materials.

8. The packaging of containers according to any one of claims 1 to 7, wherein the containers are arranged in at least one row on a rectangular base area, and wherein the size of the bottom piece fits to the base area.

9. The packaging of containers according to any one of claims 1 to 8, wherein the containers have a height h and the bottom piece is a bottom tray (1a) having side flaps, and wherein the side flaps of the bottom tray (1a) extend from the bottom of the packaging of containers to at most 35% of h.

10. The packaging of containers according to any one of claims 1 to 9 further comprising a second paper tape (5) comprising an adhesive, wherein the second paper tape (5) spans horizontally around the plurality of containers, and wherein *preferably* the paper of the second paper tape (5) is as defined in claims 3 or 4, and *preferably* the adhesive is as defined in claims 5 or 6.

11. The packaging of containers according to any one of claims 1 to 9, wherein the bottom piece is a bottom sheet (1b), and wherein
the packaging of containers further comprises a second paper tape (5) comprising an adhesive, wherein the second paper tape (5) spans horizontally around the plurality of containers, and wherein *preferably* the paper of the second paper tape (5) is as defined in claims 3 or 4, and *preferably* the adhesive is as defined in claims 5 or 6;
and/or
wherein the containers are glued to the bottom sheet (1b) by means of an adhesive.

12. The packaging of containers according to claim 12, wherein the packaging material consists of the bottom sheet (1b), the first paper tape (3) comprising adhesive, optionally the second paper tape (5) comprising adhesive, and/or optionally the adhesive gluing the containers to the bottom sheet (1b).

13. The packaging of containers according to any one of claims 1 to 8, wherein the packaging of containers further comprises a second paper tape (5) comprising an adhesive, wherein the second paper tape (5) spans horizontally around the plurality of containers, and wherein *preferably* the paper of the second paper tape (5) is as defined in claims 3 or 4, and *preferably* the adhesive is as defined in claims 5 or 6;
and/or
wherein the containers are glued to the bottom piece by means of an adhesive, *preferably* by means of a hot melt pressure sensitive adhesive;
and/or
the first paper tape (3) is fiber-reinforced;
and/or
the first paper tape (3) folded upon itself on top of the packaging of containers to form the handle (4), or a piece of paper is attached to the first paper tape (3) on top of the packaging of containers to form the handle (4).

14. The packaging of containers according to any one of claims 1 to 14, wherein at least 90% by weight of the packaging material are comprised of paper fiber-based materials, and wherein *preferably* the packaging material is entirely comprised of compostable materials.
